# FASCICULE DE BREVET EUROPEEN

(11) **EP 2 135 797 B1**
(45) Date de publication et mention de la délivrance du brevet: **26.10.2011**
(21) Numéro de dépôt: 09162815.6
(22) Date de dépôt: 16.06.2009
(51) Int. Cl.: B62D 21/15, B62D 25/08, B62D 29/04

(54) **Module de face avant pour un véhicule automobile.**
Modul für die Frontseite eines Kraftfahrzeugs
Front face module for an automobile

(30) Priorité: 18.06.2008 FR 0854027
(43) Date de publication de la demande: 23.12.2009
(73) Titulaire: Faurecia Bloc Avant, 92000 Nanterre (FR)
(72) Inventeur: Gonin, Vincent, 25600, SOCHAUX (FR); Rivière, Caroline, 15320 Faverolles (FR); Ménard, Magalie, 90200 Auxelles Haut (FR)
(74) Mandataire: Jacobson, Claude

(56) Documents cités:
- EP-A- 0 291 385
- FR-A- 2 805 504

## Description

L'invention concerne un module de face avant pour véhicule automobile, du type comportant un bouclier ayant au moins une poutre transversale et un cadre structurel de support du bouclier, le cadre structurel étant destiné à être fixé sur des brancards et/ou des prolonges de berceau du châssis du véhicule automobile.

Le document FR-A-2 829 733 décrit un module de face avant comportant un bouclier et un cadre structurel jouant le rôle d'une face avant technique. Le bouclier comporte une traverse supérieure, une traverse inférieure et deux jambages verticaux reliant les traverses supérieures et inférieures entres elles. Le cadre structurel, en forme de « U », constitue la paroi arrière de la traverse inférieure et des jambages verticaux du bouclier. Le cadre structurel est fixé au châssis de sorte qu'une zone inférieure de la paroi arrière d'un jambage vertical est en appui contre un élément déformable inférieur d'absorption d'énergie (« crash-box » en anglais) fixé sur une platine d'extrémité d'un élément inférieur du châssis, tel qu'une prolonge de berceau, et qu'une zone supérieure de la paroi arrière d'un jambage vertical est en appui contre un élément déformable supérieur fixé sur une platine d'extrémité d'un élément supérieur du châssis, tel qu'un brancard Le document FR-A-2 805 504 divulgue un module de face avant d'après le préambule de la revendication 1.

Le module de face avant selon l'art antérieur comporte un grand nombre d'élément et de pièces, dont l'approvisionnement et l'assemblage sur la chaîne de production rendent le montage de la face avant particulièrement complexe.

L'invention a pour but de pallier à ce problème en proposant un module de face avant simplifiant la chaîne logistique et facilitant le montage.

Pour cela, l'invention concerne un module de face avant du type précité, **caractérisé en ce que** le cadre structurel comprend une pièce comportant au moins une traverse inférieure et des montants verticaux, en ce que chaque montant vertical du cadre structurel forme un élément déformable d'absorption d'énergie supérieur au droit de ladite poutre supérieure et un élément déformable d'absorption d'énergie inférieur au droit de ladite poutre inférieure, et en ce que chaque montant vertical du cadre structurel est situé au droit d'un jambage vertical associé du bouclier, chaque montant vertical comprenant une superposition d'une pluralité d'éléments d'absorption d'énergie, de sorte qu'en cas de choc, le jambage vertical associé vienne en appui de la pluralité d'éléments d'absorption d'énergie du montant vertical situé en regard.

Suivant des modes particuliers de l'invention, le module de face avant comporte une ou plusieurs des caractéristiques suivantes, prise(s) isolément ou suivant toutes les combinaisons techniquement possibles :
- la pièce est monobloc, les montants verticaux et ladite traverse inférieure étant venus de matière ;
- le cadre structurel comporte une traverse supérieure reliant entre eux lesdits montants verticaux de ladite pièce ;
- la traverse supérieure est venue de matière avec les montants verticaux de ladite pièce ;
- en position assemblée du bouclier et du cadre structurel, la traverse supérieure du cadre structurel est située au-dessus du niveau de la poutre transversale du bouclier située en position la plus haute ;
- la traverse supérieure comporte des prolongements latéraux droit et gauche, situés dans un plan sensiblement horizontal, arqués vers l'arrière du véhicule, et destinés à être solidarisés à des longerons d'aile droite et gauche, respectivement ;
- la traverse supérieure du cadre structurel porte des moyens de fermeture aptes à coopérer avec des moyens de fermeture conjugués prévus sur un capot du véhicule automobile ;
- chaque montant vertical du cadre structurel vient en appui contre une platine, s'étendant au moins au droit dudit élément déformable d'absorption d'énergie et étant destinée à être fixée aux extrémités d'une prolonge de berceau et d'un brancard situés d'un même côté du véhicule automobile ;
- le cadre structurel porte un ensemble de refroidissement, fixé à la traverse inférieure et/ou à la traverse supérieure, le cadre structurel jouant le rôle d'une face avant technique.

L'invention concerne également un véhicule automobile comportant un module de face avant tel que celui qui vient d'être présenté.

L'invention et ses avantages seront mieux compris à la lecture de la description qui va suivre, donnée uniquement à titre d'exemple, et faite en se référant aux dessins annexés, dans lesquels :
- la figure 1 est une coupe selon un plan vertical médian du véhicule automobile, d'un premier mode de réalisation d'un module de face avant ;
- la figure 2 est une vue en perspective du module de face avant de la figure 1, permettant de montrer la face arrière du module de face avant ; et ,
- la figure 3 est une vue en perspective éclatée d'un second mode de réalisation du module de face avant.

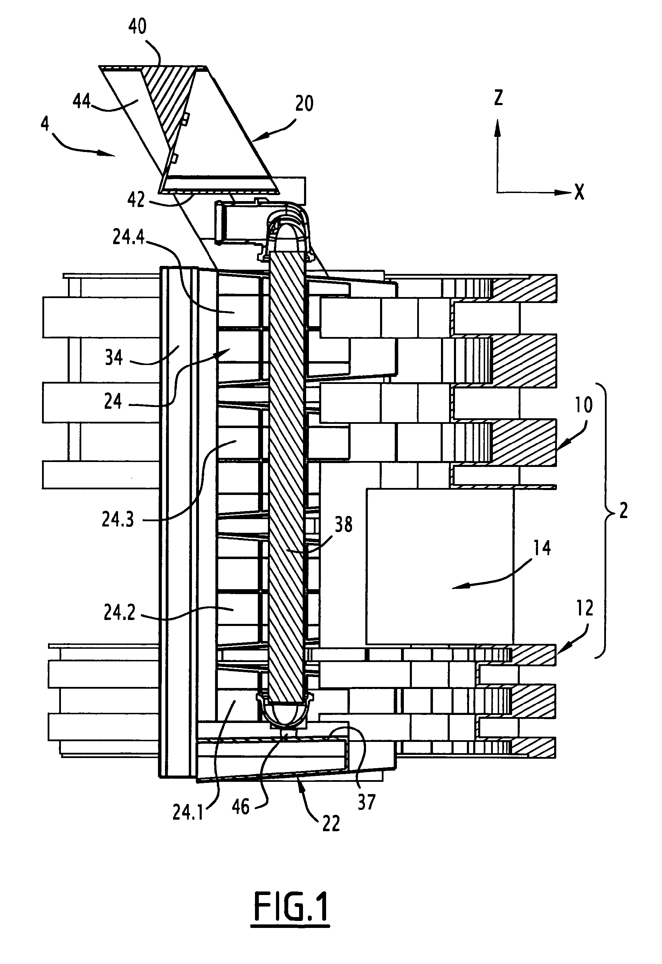

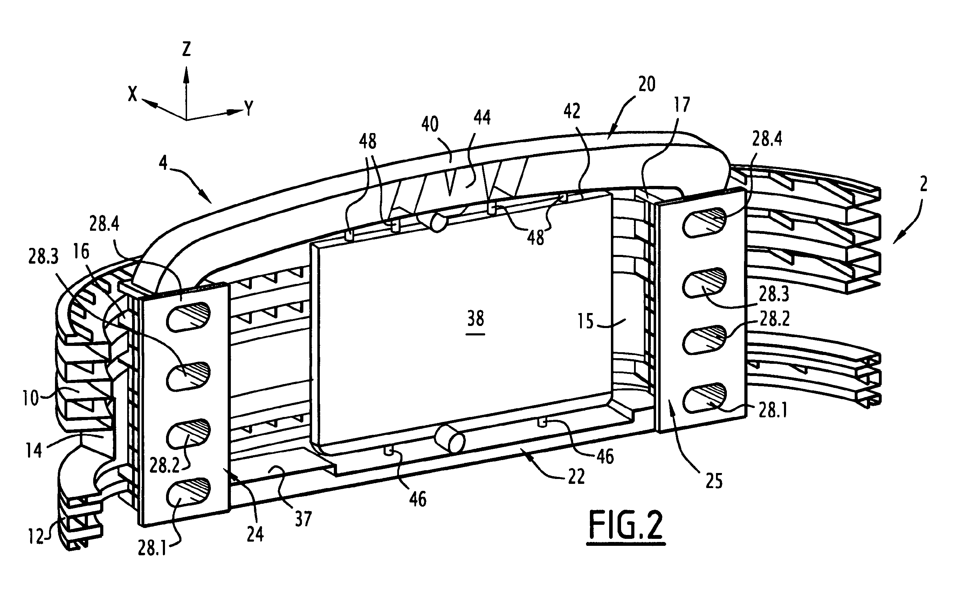

Le module de face avant 1 représenté sur les figures 1 et 2 comporte un bouclier 2 et un cadre structurel 4. Le bouclier 2 est solidaire du cadre structurel. Le cadre structurel 4 est destiné à être fixé sur des platines fixées aux extrémités de brancards et de prolonges de berceau dont est équipé le châssis du véhicule automobile sur lequel est monté le module de face avant 1.

Le bouclier 2 comporte une poutre supérieure 10, une poutre inférieure 12 et deux jambages verticaux droit 14 et gauche 15. Les poutres supérieure 10 et inférieure 12 sont disposées parallèlement à la direction transversale Y du véhicule. Les portions d'extrémité droite et gauche de la poutre supérieure 10, respectivement de la poutre inférieure 12, sont recourbées, dans un plan sensiblement horizontal, vers l'arrière du véhicule, de sorte que la poutre 10, 12 présente une forme arquée.

Le bouclier 2 est rigide et est réalisé en une matière plastique, de préférence par moulage d'une matière thermoplastique. Avantageusement, le bouclier 2 est une pièce monobloc.

Le bouclier 2 est destiné à porter, sur sa face avant orientée vers l'extérieur du véhicule, une peau (non représentée) en un matériau plastique définissant la surface extérieure de l'avant du véhicule. Avantageusement, les poutres supérieure 10 et inférieure 12 sont conformées pour épouser la surface extérieure de l'avant du véhicule. Le bouclier 2 ayant un rôle structurel, l'épaisseur de la peau de bouclier du module de face avant selon l'invention peut être réduite.

La face arrière du bouclier 20 présente, au droit des jambages verticaux 14 et 15, des évidements 16 et 17 dont la forme est adaptée pour recevoir une portion avant des montants verticaux du cadre structurel 4 qui va maintenant être décrit.

Le cadre structurel 4 participe à la rigidité de la caisse du véhicule. Il comporte une traverse supérieure 20, une traverse inférieure 22, et des montants verticaux droit 24 et gauche 25.

Le montant vertical droit 24, respectivement le montant vertical gauche 25, du cadre structurel 4 est constitué par une pluralité d'éléments déformables 28. Dans le mode de réalisation envisagé, quatre éléments déformables 28.1 à 4 sont superposés selon la direction verticale Z. Dans une variante de réalisation, un montant vertical est constitué par une rampe déformable continue. Un élément ou une rampe déformable est une structure sensiblement parallélépipédique apte à absorber, en s'écrasant selon son épaisseur, une fraction de l'énergie d'un choc.

La face arrière d'un montant vertical 24, 25 vient en appui sur l'essentiel de la surface d'une platine 34, 35 étendue reliant, d'un même côté du véhicule, les extrémités d'une prolonge de berceau située à un niveau inférieur et d'un brancard situé à un niveau plus élevé.

L'élément déformable 28.1 situé en bas d'un montant vertical 24, 25 est destiné à être placé au droit de la poutre inférieure 12 du bouclier 2. L'élément déformable 28.4 situé en haut d'un montant vertical 24, 25 est destiné à être placé au droit de la poutre supérieure 10 du bouclier 2. Les deux éléments déformables 28.2 et 28.3 intermédiaires d'un montant 24, 25 sont destinés à être placés au droit d'un jambage 14 ou 15 associé.

La traverse inférieure 22 du cadre structurel 4 relie les deux éléments d'absorption 28.1 les plus bas de chacun des montants verticaux 24 et 25. La traverse inférieure 22 a une section de forme générale rectangulaire. La portion centrale de la traverse inférieure 22 est amincie selon la direction verticale Z, de sorte que sa face supérieure 37 présente un logement de réception d'un ensemble de refroidissement, indiqué de manière générale par la référence 38. L'ensemble de refroidissement 38 comporte un groupe motoventilateur et un radiateur.

La traverse supérieure 20 du cadre structurel 4 relie les deux éléments déformables 28.4 les plus hauts des montants verticaux droit 24 et gauche 25. La traverse supérieure 20 est de forme générale en arche. La traverse supérieure 20, en tant que poutre à treillis, comporte une membrure supérieure 40 et une membrure inférieure 42 reliées entre elles par des nervures de renfort qui s'étendent selon la direction longitudinale X. Les nervures de renfort sont disposées de manière à former des caissons intérieurs triangulaires. La section de la traverse supérieure 20, dans le plan vertical médian, présente une forme en losange, avec un côté supérieur disposé essentiellement horizontalement et correspondant à la membrure supérieure 40, un côté inférieur correspondant à la membrure inférieure 42, et des côtés avant et arrière inclinés vers le haut et vers l'arrière du véhicule. La traverse supérieure 20 sort ainsi vers l'arrière du plan vertical défini par la traverse inférieure 22 et les montants verticaux 24 et 25.

La membrure supérieure 40 de la traverse supérieure 20 est adaptée pour coopérer avec un élément de carrosserie du véhicule et en particulier avec un capot de celui-ci. Une face intérieure du capot, orientée vers l'intérieur du véhicule, vient en appui sur la membrure supérieure 40, qui est conformée à cet effet.

Une portion médiane de la traverse supérieure 20 présente un logement 44 de réception de moyens de fermeture du capot destinés à coopérer avec des moyens de fermeture conjugués prévus sur le capot.

Des moyens de maintien de l'ensemble de refroidissement 38 sont prévus sur la membrure inférieure 42 de la traverse supérieure 40. Dans un mode de réalisation particulièrement avantageux du module de face avant, le bord inférieur de l'ensemble de refroidissement 38 est relié à la traverse inférieure 22 par des languettes de fixation 46, tandis que le bord supérieur du radiateur 38 est relié par des languettes de fixation 48 à la traverse supérieure 20.

Le cadre structurel 4 monobloc est de préférence réalisé en une matière plastique, par exemple par injection d'un thermoplastique. De préférence, les traverses supérieure 20 et inférieure 22 et les montants verticaux 24 et 25 sont venus de matière. En variante, la traverse inférieure 22 et les montants verticaux 24 et 25 sont venus de matière pour former une pièce en « U », puis la traverse supérieure 20 est fixée, par exemple par collage, sur la partie supérieure des montants verticaux 24, 25. Dans encore une autre variante, les montants verticaux 24, 25 sont moulés puis fixés à la traverse inférieure 22, par exemple par collage, pour former une pièce en « U », sur laquelle on vient ensuite fixer la traverse supérieure 20.

Le montage du module de face avant 1 est réalisé de la manière suivante. On fixe d'abord les platines droite 34 et gauche 35 aux extrémités des brancards et des prolonges de berceau droits et gauches, respectivement. Puis, le cadre structurel 4 est solidarisé aux platines 34, 35. Enfin, en utilisant des moyens de fixation, le bouclier 2 est fixé sur le cadre structurel 4 en emboîtant les portions avant des montants verticaux droit 24 et gauche 25 dans les évidements droit 16 et gauche 17 ménagés sur la face arrière du bouclier 2. Ces moyens de fixation sont des moyens du type vis/écrou, connus de l'homme du métier pour la réalisation de liaisons métal sur métal ou plastique sur métal.

Lors d'un choc, la forme en cage du bouclier 2 permet de répartir les forces puis de les transférer aux brancards et aux prolonges de berceau du châssis du véhicule par l'intermédiaire des deux montants verticaux du cadre structurel 4. Lorsque les forces transférées dépassent une valeur de seuil, les éléments déformables d'absorption d'énergie 28 sont écrasés en dissipant une fraction de l'énergie du choc.

Le module de face avant permet de placer l'ensemble de refroidissement 38 sur la traverse inférieure 22 du cadre structurel 4 jouant le rôle d'une face avant technique, la forme arquée du bouclier permettant de conserver un espace devant l'ensemble de refroidissement 38. Avantageusement, en fixant l'ensemble de refroidissement 38 au moyen de languettes de fixation déformables ou frangibles, l'ensemble de refroidissement 38 peut se translater vers l'arrière du véhicule en cas de choc par l'avant. De cette manière, l'ensemble de refroidissement ne doit pas être systématiquement remplacé après un choc. Le module de face avant est compact et permet de raccourcir de quelques centimètres le châssis. L'ensemble du bloc avant du véhicule selon l'invention est alors décalé vers l'arrière, de sorte que le porte-à-faux antérieur du véhicule est réduit.

Dans le mode de réalisation décrit, il est envisagé que la poutre supérieure 10 soit au droit des éléments déformables supérieurs 28.4, eux-mêmes au droit des extrémités des brancards de la caisse du véhicule ; et que la poutre inférieure 12 soit au droit des éléments déformables inférieurs 28.1, eux-mêmes au droit des extrémités des prolonges de berceau de la caisse. Du fait de la présence des platines étendues 34, 35, l'extrémité d'un brancard peut être au droit d'un élément déformable 28.3 alors que la poutre supérieure peut-être au droit de l'élément déformable 28.4. Ceci permet d'augmenter verticalement la hauteur du bouclier et d'améliorer les performances du véhicule aux chocs du type compatibilité entre véhicules de gabarits différents.

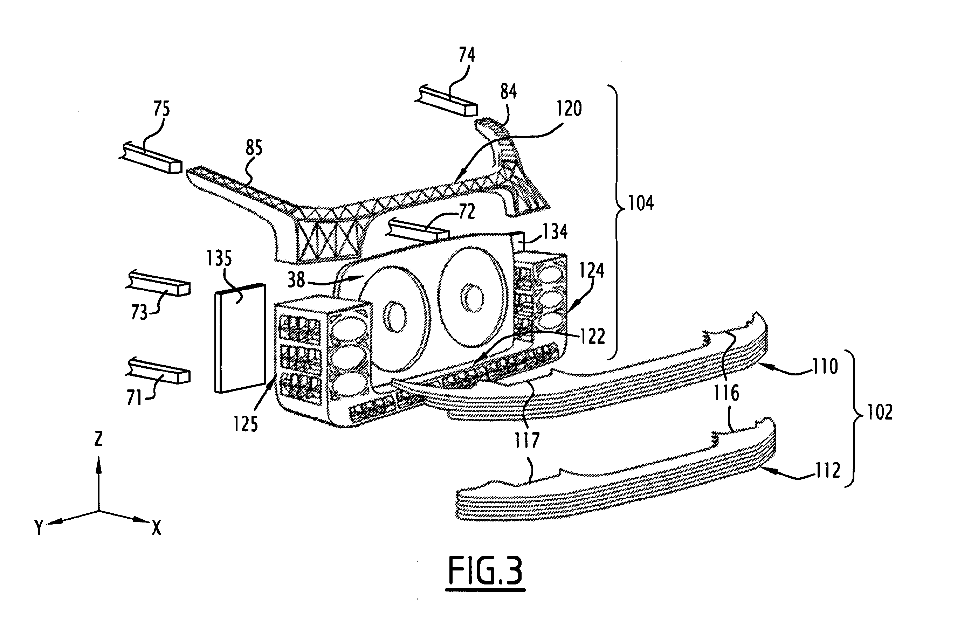

Un second mode de réalisation va maintenant être décrit en référence à la figure 3. Les éléments représentés sur cette figure sont indiqués par des numéros de références augmentés de 100 par rapport aux numéros de références indiquant les éléments similaires des figures 1 et 2.

Ce second mode de réalisation est adapté à un véhicule automobile présentant des prolonges de berceau droite et gauche 71, en voie inférieure, des brancards droit 72 et gauche 73, en voie intermédiaire, et des longerons d'aile droit 74 et gauche 75, en voie supérieure.

Le module de face avant 101 comporte des platines étendues 134, 135, un cadre structurel 104 et un bouclier 102.

Les platines étendues 134, 135 sont fixées respectivement aux extrémités d'une prolonge de berceau 70, 71 et d'un brancard 72, 73 situés du même côté du véhicule.

Le cadre structurel 104 comporte une pièce monobloc en forme en « U » ayant des montants verticaux 124, 125 et une traverse inférieure 122 venus de matière. Les faces arrière des montants verticaux 124, 125 sont destinées à venir en appui sur la majeure partie de la surface des platines 134, 135.

Le cadre structurel 104 comporte également une traverse supérieure 120 reliant les extrémités supérieures des montants verticaux 124 et 125 entre eux. Pour des raisons liées au procédé de moulage par injection, il est préférable de réaliser le cadre structurel 101 en associant, par exemple par collage, la traverse supérieure 120 sur la pièce monobloc en « U ».

Ces éléments sont analogues à ceux du premier mode de réalisation, cependant, selon ce second mode de réalisation, la traverse supérieure 120 présente des prolongements latéraux droit 84 et gauche 85. Les prolongements latéraux 84 et 85 s'étendent dans un plan sensiblement horizontal et sont arqués vers l'arrière du véhicule. L'extrémité libre du prolongement droit 84, respectivement du prolongement gauche 85, est fixée à l'extrémité du longeron d'aile droit 74, respectivement gauche 75, de la caisse du véhicule.

Le bouclier 102 comporte une poutre inférieure 112 et une poutre supérieure 110. La face arrière de la poutre inférieure 112, respectivement de la poutre supérieure 110, est munie d'évidements droit 116 et gauche 117, aptes à recevoir les portions avant des montants verticaux 124, 125 du cadre structurel 104.

En fixant le module de face avant également sur les longerons d'aile, on créé une voie « très haute » permettant de répartir les efforts sur la caisse du véhicule.

## Revendications

1. Module de face avant (1) pour véhicule automobile, du type comportant un bouclier (2) comprenant une poutre supérieure (10), une poutre inférieure (12) et des jambages verticaux (14, 15) reliant les poutres entre elles, et un cadre structurel (4) de support du bouclier, le cadre structurel étant destiné à être fixé sur des brancards et/ou des prolonges de berceau du châssis du véhicule automobile, **caractérisé en ce que** le cadre structurel comprend une pièce comportant au moins une traverse inférieure (22) et des montants verticaux (24, 25), **en ce que** chaque montant vertical (24, 25) du cadre structurel (4) forme un élément déformable d'absorption d'énergie supérieur (28.4) au droit de ladite poutre supérieure (10) et un élément déformable d'absorption d'énergie inférieur (28.1) au droit de ladite poutre inférieure (12), et **en ce que** chaque montant vertical (24, 25) du cadre structurel (4) est situé au droit d'un jambage vertical associé (14, 15) du bouclier (2), chaque montant vertical comprenant une superposition d'une pluralité d'éléments d'absorption d'énergie (28.1 à 28.4), de sorte qu'en cas de choc, le jambage vertical (14,15) associé vienne en appui de la pluralité d'éléments d'absorption d'énergie (28.1 à 28.4) du montant vertical situé en regard.

2. Module de face avant selon la revendication 1, **caractérisé en ce que** ladite pièce est monobloc, les montants verticaux et ladite traverse inférieure étant venus de matière.

3. Module de face avant selon l'une quelconque des revendications précédentes, **caractérisé en ce que** le cadre structurel (4) comporte une traverse supérieure (20) reliant entre eux lesdits montants verticaux (24, 25) de ladite pièce.

4. Module de face avant selon la revendication 3, **caractérisé en ce que** ladite traverse supérieure (20) est venue de matière avec les montants verticaux de ladite pièce.

5. Module de face avant selon la revendication 3 ou de la revendication 4, **caractérisé en ce que**, en position assemblée du bouclier (2) et du cadre structurel (4), la traverse supérieure (20) du cadre structurel est située au-dessus du niveau de la poutre transversale (10) du bouclier située en position la plus haute.

6. Module de face avant selon l'une quelconque des revendications 3 à 5, **caractérisé en ce que** la traverse supérieure (20) comporte des prolongements latéraux droit (84) et gauche (85), situés dans un plan sensiblement horizontal, arqués vers l'arrière du véhicule, et destinés à être solidarisés à des longerons d'aile droite et gauche, respectivement.

7. Module de face avant selon l'une quelconque des revendications 3 à 6, **caractérisé en ce que** la traverse supérieure (20) du cadre structurel (4) porte des moyens de fermeture aptes à coopérer avec des moyens de fermeture conjugués prévus sur un capot du véhicule automobile.

8. Module de face avant selon l'une quelconque des revendications précédentes, **caractérisé en ce que** chaque montant vertical (24, 25) du cadre structurel (4) vient en appui contre une platine (34, 35), s'étendant au moins au droit dudit élément déformable d'absorption d'énergie (28) et étant destinée à être fixée aux extrémités d'une prolonge de berceau et d'un brancard situés d'un même côté du véhicule automobile.

9. Module de face avant selon l'une quelconque des revendications précédentes, **caractérisé en ce que** le cadre structurel (4) porte un ensemble de refroidissement (38), fixé à la traverse inférieure (22) et/ou à la traverse supérieure (20), le cadre structurel jouant le rôle d'une face avant technique.

10. Véhicule automobile **caractérisé en ce qu'**il comporte un module de face avant selon l'une quelconque des revendications 1 à 9.

## Claims

1. Front face module (1) for an automotive vehicle, of the type comprising a shield (2) comprising an upper beam (10), a lower beam (12) and vertical jamb posts (14, 15) linking the beams to one another, and a structural frame (4) supporting the shield, which structural frame is designed to be secured to shafts and/or cradle extensions of the chassis of the automotive vehicle, **characterised in that** the structural frame comprises one piece incorporating at least a lower cross-member (22) and vertical posts (24, 25), each vertical post (24, 25) of the structural frame (4) constitutesan upper deformable element for absorbing energy (28.4) on a level with said upper beam (10) and a lower deformable element for absorbing energy (28,1) on a level with said tower beam (12), and each vertical post (24, 25) of the structural frame (4) is disposed on a level with a co-operating vertical jamb post (14, 15) of the shield (2), each vertical post comprising a super-imposition of a plurality of energy absorbing elements (28.1 to 28.4) so that the co-operating vertical jamb post (14, 15) moves into a position supported on the plurality of energy absorbing elements (28.1 to 28.4) of the vertical post disposed opposite in the event of impact.

2. Front face module as claimed in claim 1, **characterised in that** said piece is a monobloc, the vertical posts and said lower cross-member being integrally cast.

3. front face module as claimed in any one of the preceding claims, **characterised in that** the structural frame (4) has an upper cross-member (20) connecting said vertical posts (24, 25) of said piece to one another.

4. Front face module as claimed in claim 3, **characterised in that** said upper cross-member (20) is integrally cast with the vertical posts of said piece.

5. Front face module as claimed in claim 3 or claim 4, **characterised in that** when the shield (2) and the structural frame (4) are assembled, the upper cross-member (20) of the structural frame is disposed above the level of the transverse beam (10) oaf the shield disposed in the uppermost position.

6. Front face module as claimed in any one of claims 3 to 5, **characterised in that** the upper cross-member (20) has right-hand (84) and left--hand (85) extensions disposed in a substantially horizontal plane, arched towards the rear of the vehicle and joined to right-hand and left-hand wing side members respectively.

7. Front face module as claimed in any one of claims 3 to 6, **characterised in that** the upper cross-member (20) of the structural frame (4) supports closure means designed to co-operate with conjugate closure means provided on a bonnet of the automotive vehicle.

8. Front: face module as claimed in any one of the preceding claims, **characterised in that** each vertical post (24, 25) of the structural frame (4) is supported against a plate (34, 35) extending at least in alignment with said energy absorbing deformable element (28) and being designed to be secured to the ends of a cradle extension and a shaft disposed on a same side of the automotive vehicle.

9. Front face module as claimed in any one of the preceding claim, **characterised in that** the structural frame (4) supports a cooling unit (38) secured to the lower cross-member (22) and/or the upper cross-member (20), the structural frame fulfilling the role of a technical front face.

10. Automotive vehicle, **characterized in that** it has a front face module as claimed in any one of claims 1 to 9.

## Patentansprüche

1. Frontmodul (1) für ein Kraftfahrzeug des Typs, der einen Schild (2) aufweist, der einen oberen Träger (10), einen unteren Träger (12) und zwei vertikale Stützen (14, 15), die die Träger miteinander verbinden, und einen strukturellen Rahmen (4) zum. Halten des Schildes umfasst, wobei der strukturelle Rahmen vorgesehen ist, an Länasträgern und/oder Verlängerungen des Motorträger des Fahrgestells des Kraftfahrzeugs befestigt zu werden, **dadurch gekennzeichnet, dass** der strukturelle Rahmen ein Teil umfasst, das mindestens eine untere Traverse (22) und senkrechte Ständer (24, 25) aufweist, dass jeder vertikale Ständer (24, 25) des strukturellen Rahmens (4) ein oberes verformbares Element (28.4) zur Energieabsorption direkt beim oberen Träger (10) und ein unteres verformbares Element (28.1.) zur Energieabsorplion direkt beim unteren Träger (12) bildet, und dass jeder vertikale Ständer (24, 25) des strukturellen Rahmens (4) direkt bei einer zugeordneten Stütze (14, 15) des Schildes (2) angeordnet ist, wobei jeder vertikale Ständer eine Übereinanderanordnunc einer Mehrzahl von Energieabsorptionselementen (28.1 bis 28.4) umfasst, derart, dass im Falle eines Stoßes die zugeordnete vertikale Stütze (14, 15) in Abstützung gegen die Mehrzahl von Energieabsorptionselementen (28.1 bis 28.4) des vertikalen, gegenüberliegenden Ständers kommen.

2. Frontmodul nach Anspruch 1, **dadurch gekennzeichnet, dass** das Teil einstückig ist, wobei die vertikalen Ständer und die untere Traverse aus einem Material bestehen.

3. Frontmodul nach einem beliebigen der vorhergehenden Ansprüche, **dadurch gekennzeichnet, dass** der strukturelle Rahmen (4) eine obere Traverse (20) aufweist, die die vertikalen Ständer (24, 25) des Teils untereinander verbinden.

4. Frontmodul nach Anspruch 3, **dadurch gekennzeichnet, dass** die obere Traverse (20) aus einem Material mit den vertikalen Ständern des Teils besteht.

5. Frontmodul nach Anspruch 3 oder Anspruch 4, **dadurch gekennzeichnet, dass** im zusammengesetzten Zustand des Schildes (2) und des strukturellen Rahmens (4) die obere Traverse (20) des strukturellen Rahmens über dem Niveau des Querträgers (10) des Schildes, der an oberster Stelle liegt, angeordnet ist.

6. Frontmodul nach einem beliebigen der Ansprüche 3 bis 5, **dadurch gekennzeichnet, dass** die obere Traverse (20) seitliche rechte (84) und linke (85) Verlängerungen aufweist, die in einer im Wesentlichen horizontalen Ebene anbeordnet sind, nach hinten in Bezug auf das Fahrzeug gekrümmt sind und vorgesehen sind, jeweils mit Längsträgern des linken und rechten Kotflügels verbunden zu werden.

7. Frontmodul nach einem beliebigen der Ansprüche 3 bis 6, **dadurch gekennzeichnet, dass** die obere Traverse (20) des strukturellen Rahmens (4) Schließmittel trägt, die geeignet sind, mit zugeordneten Schließmittel zusammenzuarbeiten, die an der Haube des Kraftfahrzeugs angebracht sind.

8. Frontmodul nach einem beliebigen der vorhergehenden Ansprüche, **dadurch gekennzeichnet, dass** jeder vertikale Ständer (24, 25) des strukturellen Rahmens (4) in Anlage gegen eine Platte (34, 35) kommt, die sich mindestens direkt beim verformbaren Energieabsorptionselement (28) erstreckt und vorgesehen ist, an den Enden einer Verlängerung des Motorträgers und eines Längsträgers befestigt zu werden, die an einer selben Seite des Fahrzeugs liegen.

9. Frontmodul nach einem beliebigen der vorhergehenden Ansprüche, **dadurch gekennzeichnet, dass** der strukturelle Rahmen (4) eine Kühlanordnung (38) tragt, die an der unteren Traverse (22) und/oder der oberen Traverse (20) befestigt ist, wobei der strukturelle Rahmen die technische Rolle einer Frontseite spielt.

10. Kraftfahrzeug, **dadurch gekennzeichet, dass** es ein Frontmodul nach einem beliebigen der Ansprüche 1 bis 9 aufweist.
